# EUROPÄISCHE PATENTSCHRIFT

(11) **EP 2 739 879 B1**
(45) Veröffentlichungstag und Bekanntmachung des Hinweises auf die Patenterteilung: **14.09.2016**
(21) Anmeldenummer: 12737213.4
(22) Anmeldetag: 17.07.2012
(51) Int. Cl.: F16H 45/02, F16H 41/24, H02K 7/00, B60K 6/26, B60K 6/387, B60K 6/405, B60K 6/48

(54) **DREHMOMENTWANDLERVORRICHTUNG FÜR EIN KRAFTFAHRZEUG**
TORQUE CONVERTER DEVICE FOR A MOTOR VEHICLE
DISPOSITIF DE CONVERSION DE COUPLE POUR UN VÉHICULE AUTOMOBILE

(30) Priorität: 06.08.2011 DE 102011109702
(43) Veröffentlichungstag der Anmeldung: 11.06.2014
(73) Patentinhaber: Daimler AG, 70327 Stuttgart (DE)
(72) Erfinder: SPERRFECHTER, Stefan, 73072 Donzdorf (DE); HÄRTER, Tobias, 70174 Stuttgart (DE); STRAUB, Heinrich, 70327 Stuttgart (DE); ZIEGLER, Bernhard, 73098 Rechberghausen (DE); SCHUSTER, Tobias, 73733 Esslingen (DE)
(74) Vertreter: JENSEN & SON
(86) Internationale Anmeldenummer: PCT/EP2012/002994
(87) Internationale Veröffentlichungsnummer: WO 2013/020633

(56) Entgegenhaltungen:
- EP-A1- 0 308 072
- EP-A2- 1 900 468
- DE-A1- 10 221 625
- DE-A1-102009 040 367
- DE-A1-102009 042 050
- JP-A- 2009 001 127
- US-A1- 2005 133 328

## Beschreibung

Die Erfindung betrifft eine Drehmomentwandlervorrichtung nach dem Oberbegriff des Anspruchs 1.

Aus der US 2005/133328 A1, der EP 0 308 072 A1, der JP 2009 001127 A sind jeweils Drehmomentwandlervorrichtungen bekannt, welche zumindest eine Lamellenkupplung aufweisen.

Aus der gattungsgemäßen DE 10 2009 042 050 A1 ist bereits eine Drehmomentwandlervorrichtung für ein Hybridkraftfahrzeug, mit einem einstückig ausgebildeten Gehäuseelement, das dazu vorgesehen ist, einen Drehmomentwandler und einen Verbrennungsmotor antriebstechnisch miteinander zu verbinden, bekannt. Dabei bildet das Gehäuseelement einen Lamellenträger zur Aufnahme von einer Lamelle einer Wandlerüberbrückungskupplung aus.

Der Erfindung liegt insbesondere die Aufgabe zugrunde, eine kostengünstige Drehmomentwandlervorrichtung bereitzustellen, die besonders einfach herstellbar ist. Diese Aufgabe wird gemäß der Erfindung durch die Merkmale des Anspruchs 1 gelöst. Weitere Ausgestaltungen ergeben sich aus den Unteransprüchen.

Die Erfindung geht aus von einer Drehmomentwandlervorrichtung für ein Kraftfahrzeug, mit zumindest einem einstückig ausgebildeten Gehäuseelement, das dazu vorgesehen ist, einen Drehmomentwandler und einen Verbrennungsmotor antriebstechnisch miteinander zu verbinden.

Dabei bildet das Gehäuseelement wenigstens einen Lamellenträger zur Aufnahme von zumindest einer Lamelle einer Wandlerüberbrückungskupplung aus. Dadurch kann ein vollintegrierter Lamellenträger bereitgestellt werden, wodurch die Drehmomentwandlervorrichtung vereinfacht werden kann. Weiter kann besonders einfach auf zumindest eine Verbindungsstelle verzichtet werden, wodurch eine Komplexität der Drehmomentwandlervorrichtung verringert, eine Montage vereinfacht und/oder Kosten, Gewicht und/oder ein benötigter Bauraum eingespart werden können. Besonders einfach kann dadurch eine Trägheit von Bauteilen der Drehmomentwandlervorrichtung reduziert werden, wodurch ein Wirkungsgrad der Drehmomentwandlervorrichtung erhöht werden kann. Dadurch kann eine kostengünstige Drehmomentwandlervorrichtung bereitgestellt werden, die besonders einfach herstellbar ist. Unter "einstückig" soll insbesondere eine Ausbildung als ein einziges Bauteil und/oder in einem einzigen Stück geformt verstanden werden. Unter einem Gehäuseelement" soll insbesondere ein Bauteil verstanden werden, das zumindest ein Bauteil der Drehmomentwandlervorrichtung umschließt und/oder zumindest im Wesentlichen einen Außenumfang und/oder eine axiale Erstreckung der Drehmomentwandlervorrichtung definiert. Unter einem "Lamellenträger" soll insbesondere ein Bauteil verstanden werden, das dazu vorgesehen ist, zumindest eine Lamelle einer Reibschlusskupplung drehfest und axial verschiebbar zu lagern. Vorzugsweise ist die Drehmomentwandlervorrichtung für ein Hybridkraftfahrzeug vorgesehen. Unter einer "Wandlerüberbrückungskupplung" soll insbesondere eine Kupplung verstanden werden, die dazu vorgesehen ist, in zumindest einem Betriebszustand einen Elektromotor und/oder den Verbrennungsmotor mit einer Getriebeeingangswelle mechanisch direkt zu verbinden. Unter "mechanisch direkt" soll in diesem Zusammenhang insbesondere verstanden werden, dass ein Drehmoment von dem Elektromotor und/oder von dem Verbrennungsmotor mechanisch auf die Getriebeeingangswelle übertragen wird und somit eine hydraulische Übertragung durch den Drehmomentwandler verhindert ist und der Drehmomentwandler dadurch umgangen wird. Unter "vorgesehen" soll insbesondere speziell ausgelegt, ausgestattet und/oder angeordnet verstanden werden.

Dabei ist der Lamellenträger zur Aufnahme von zumindest einer Lamelle der Wandlerüberbrückungskupplung als ein Außenlamellenträger ausgebildet. Dadurch kann eine Montage weiter vereinfacht werden.

In einer erfindungsgemäßen Ausgestaltung ist der Lamellenträger zur Aufnahme von einem Lamellenpaket vorgesehen. Dadurch kann eine besonders wirkungsvolle Wandlerüberbrückungskupplung bereitgestellt werden. Unter einem "Lamellenpaket" soll insbesondere eine Einheit verstanden werden, die zumindest zwei und vorteilhaft zumindest drei Lamellen umfasst.

Ferner wird erfindungsgemäß vorgeschlagen, dass das Gehäuseelement zumindest eine Betätigungskolbenaufnahme ausbildet, die dazu vorgesehen ist, zumindest mit einem Betätigungskolben eine Druckkammer zur Betätigung der Wandlerüberbrückungskupplung auszubilden. Dadurch kann auf zumindest eine weitere Verbindungsstelle verzichtet werden und somit die Herstellung der Drehmomentwandlervorrichtung weiter vereinfacht und eine Trägheit weiter reduziert werden. Unter einer "Druckkammer" soll insbesondere eine hydraulisch und/oder pneumatisch beaufschlagbare Kammer verstanden werden, die zumindest eine feste Wand und zumindest eine bewegliche Wand umfasst. Unter einem "Betätigungskolben" soll insbesondere ein Bauteil verstanden werden, das dazu vorgesehen ist, vorzugsweise durch eine axiale Bewegung zumindest eine Lamelle einer Kupplung axial in dem Lamellenträger zu verschieben. Die Betätigungskolbenaufnahme ist vorzugsweise zur Führung des Betätigungskolbens vorgesehen.

Erfindungsgemäß bildet das Gehäuseelement wenigstens einen Lamellenträger zur Aufnahme von zumindest einer Lamelle einer Trennkupplung, die dazu vorgesehen ist, in zumindest einem Betriebszustand einen Elektromotor und den Verbrennungsmotor mechanisch voneinander zu entkoppeln, aus. Durch die Ausbildung des Lamellenträgers der Trennkupplung und des Lamellenträgers der Wandlerüberbrückungskupplung durch das einstückig ausgebildete Gehäuseelement kann ein besonders vorteilhafter vollintegrierter Lamellenträger bereitgestellt werden, wodurch die Drehmomentwandlervorrichtung weiter vereinfacht werden kann. Das einstückig ausgebildete Gehäuseelement bildet vorzugsweise den Lamellenträger für die Wandlerüberbrückungskupplung und den Lamellenträger für die Trennkupplung aus. Der Lamellenträger für die Wandlerüberbrückungskupplung und der Lamellenträger für die Trennkupplung sind vorteilhafterweise durch ein und dasselbe Gehäuseelement ausgebildet und insbesondere verbindungsstellenfrei miteinander verbunden. Vorzugsweise ist der Lamellenträger zur Aufnahme von zumindest einer Lamelle der Trennkupplung als ein Außenlamellenträger ausgebildet. Der durch das Gehäuseelement ausgebildete Lamellenträger der Trennkupplung ist vorteilhafterweise zur Aufnahme von einem Lamellenpaket vorgesehen.

Weiter ist es vorteilhaft, wenn das Gehäuseelement zumindest eine Betätigungskolbenaufnahme ausbildet, die dazu vorgesehen ist, zumindest mit einem Betätigungskolben eine Druckkammer zur Betätigung der Trennkupplung auszubilden. Dadurch kann auf zumindest eine weitere Verbindungsstelle verzichtet werden und somit die Herstellung der Drehmomentwandlervorrichtung weiter vereinfacht und eine Trägheit weiter reduziert werden. Das einstückig ausgebildete Gehäuseelement bildet vorzugsweise die Betätigungskolbenaufnahme für die Wandlerüberbrückungskupplung und die Betätigungskolbenaufnahme für die Trennkupplung aus. Die Betätigungskolbenaufnahme für die Wandlerüberbrückungskupplung und die Betätigungskolbenaufnahme für die Trennkupplung sind vorteilhafterweise durch ein und dasselbe Gehäuseelement ausgebildet und insbesondere verbindungsstellenfrei miteinander verbunden.

Weiter wird vorgeschlagen, dass die Drehmomentwandlervorrichtung zumindest einen Drehmomentwandler mit einem Pumpenrad und zumindest eine Formschlussverbindung, die dazu vorgesehen ist, das Pumpenrad und das Gehäuseelement formschlüssig miteinander zu verbinden, aufweist. Dadurch kann eine besonders vorteilhafte Drehmomentwandlervorrichtung bereitgestellt werden.

Ferner wird vorgeschlagen, dass die Formschlussverbindung zumindest ein Schraubelement und/oder ein Nietelement aufweist. Dadurch können das Pumpenrad und das Gehäuseelement besonders einfach miteinander verbunden werden.

In einer vorteilhaften Ausgestaltung weist die Drehmomentwandlervorrichtung einen Rotorträger und eine Steckverbindung auf, die das Gehäuseelement und den Rotorträger drehmomentübertragend miteinander verbindet. Dadurch kann eine besonders vorteilhafte Drehmomentwandlervorrichtung bereitgestellt werden. Außerdem kann dadurch der Elektromotor besonders einfach zentriert werden. Unter einem "Rotorträger" soll insbesondere ein Bauteil verstanden werden, das permanent drehfest mit einem Rotor des Elektromotors verbunden ist und somit eine gleiche Drehzahl wie der Rotor ausweist.

Weiter wird vorgeschlagen, dass das Gehäuseelement als ein Guss- und/oder Sinterbauteil ausgebildet ist. Dadurch kann besonders einfach das Gehäuseelement als ein einstückiges Bauteil, insbesondere in einem Arbeitsschritt, ausgebildet werden, wodurch sich eine Herstellung der Drehmomentwandlervorrichtung weiter vereinfachen kann. Unter einem "Gussbauteil" soll insbesondere ein aus einem Guss und/oder ein mittels Gießen hergestelltes festes Bauteil verstanden werden. Vorzugsweise ist eine Form des festen Gussbauteils zumindest im Wesentlichen durch einen Gussvorgang bestimmt, wobei die Form des festen Gussbauteils mittels einer spanenden Bearbeitung angepasst werden kann, wie beispielsweise durch Bohren, Fräsen, Drehen, Schleifen und/oder Ähnliches. Unter einem "Sinterbauteil" soll insbesondere ein mittels Sintern hergestelltes festes Bauteil verstanden werden. Vorzugsweise ist eine Form des festen Sinterbauteils zumindest im Wesentlichen durch einen Sintervorgang bestimmt, wobei die Form des festen Sinterbauteils mittels einer spanenden Bearbeitung angepasst werden kann, wie beispielsweise durch Bohren, Fräsen, Drehen, Schleifen und/oder Ähnliches. Vorteilhafterweise kann das feste Gussbauteil und/oder das feste Sinterbauteil ein Vollmaterial ausbilden, aus dem das Gehäuseelement, insbesondere durch eine spanende Bearbeitung, hergestellt ist. Vorzugsweise ist die Form des festen Gussbauteils und des festen Sinterbauteils mittels eines Verfahrens bestimmt, das von einem Umformverfahren abweicht. Das Gussbauteil und/oder Sinterbauteil ist insbesondere nicht als Blechbauteil, insbesondere nicht als Blechumformbauteil ausgebildet.

Ferner wird vorgeschlagen, dass das Gehäuseelement zumindest im Wesentlichen aus Leichtmetall ausgebildet ist. Dadurch kann ein Gewicht der Drehmomentwandlervorrichtung besonders einfach reduziert werden. Unter "aus Leichtmetall ausgebildet" soll insbesondere verstanden werden, dass das Gehäuseelement aus einem Leichtmetall gegossen und/oder gesintert ist, wobei auch Legierungen denkbar sind. Unter "zumindest im Wesentlichen" soll insbesondere verstanden werden, dass das Gehäuseelement entweder vollständig aus Leichtmetall oder im Wesentlichen aus Leichtmetall ausgebildet ist. Unter "im Wesentlichen" soll insbesondere verstanden werden, dass das Gehäuseelement mindestens zu 80%, vorteilhaft mindestens zu 90% und besonders vorteilhaft mindestens zu 95% aus Leichtmetall ausgebildet ist.

In einer besonders vorteilhaften Ausgestaltung weist das Gehäuseelement Aluminium und/oder Magnesium auf. Dadurch kann ein besonders vorteilhaftes Material zur Ausbildung des Gehäuseelements verwendet werden. Unter aufweisen" soll in diesem Zusammenhang insbesondere verstanden werden, dass das Gehäuseelement aus Aluminium oder aus Magnesium oder aus einer Legierung von Aluminium und Magnesium ausgebildet ist.

Weitere Vorteile ergeben sich aus der folgenden Zeichnungsbeschreibung. In den Zeichnungen sind sechs Ausführungsbeispiele dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: schematisch eine erfindungsgemäße Drehmomentwandlervorrichtung für ein Hybridkraftfahrzeug,
- Fig. 2: eine alternativ ausgebildete erfindungsgemäße Drehmomentwandlervorrichtung für ein Hybridkraftfahrzeug schematisiert dargestellt,
- Fig. 3: ein drittes Ausführungsbeispiel einer Drehmomentwandlervorrichtung für ein Hybridkraftfahrzeug, das nicht beansprucht wird,
- Fig. 4: ein viertes Ausführungsbeispiel einer Drehmomentwandlervorrichtung für ein Hybridkraftfahrzeug, das nicht beansprucht wird,

- Fig. 5: ein fünftes Ausführungsbeispiel einer Drehmomentwandlervorrichtung für ein Kraftfahrzeug, das nicht beansprucht wird, und
- Fig. 6: ein sechstes Ausführungsbeispiel einer Drehmomentwandlervorrichtung für ein Kraftfahrzeug, das nicht beansprucht wird.

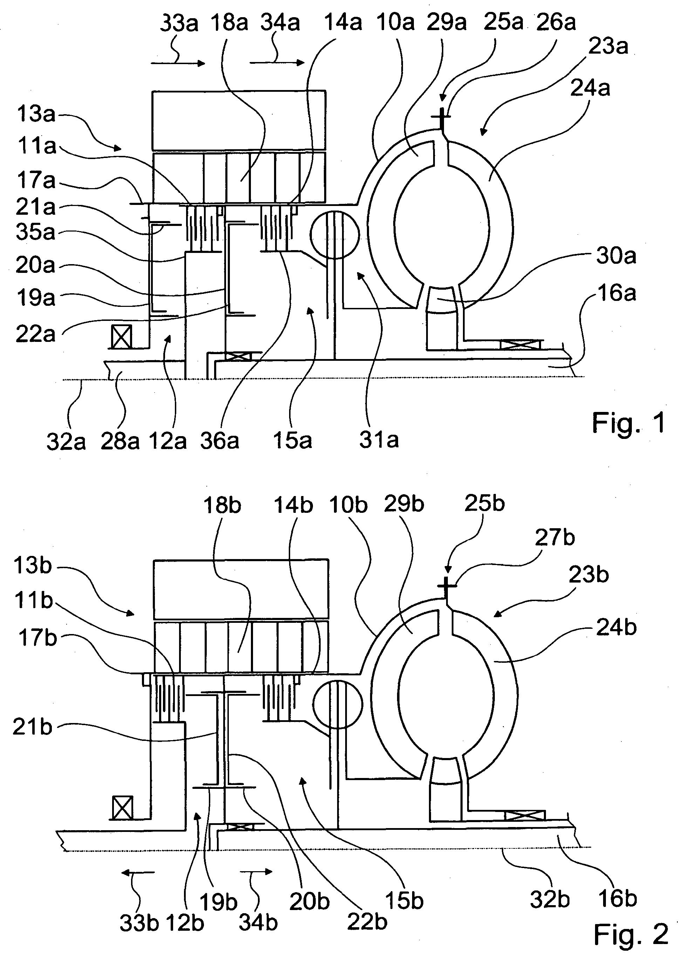

Die Figur 1 zeigt schematisch eine erfindungsgemäße Drehmomentwandlervorrichtung eines Kraftfahrzeugs. Die Drehmomentwandlervorrichtung ist als eine hydraulische Drehmomentwandlervorrichtung ausgebildet. Zur Bereitstellung eines Antriebsmoments weist das Kraftfahrzeug einen Elektromotor 13a und einen nicht näher dargestellten Verbrennungsmotor auf, die entweder einzeln oder in Kombination Antriebsräder des Kraftfahrzeugs antreiben. Der Elektromotor 13a und der Verbrennungsmotor sind bezüglich eines Kraftflusses vor der Drehmomentwandlervorrichtung angeordnet. Zur Anbindung an die Drehmomentwandlervorrichtung weist der Elektromotor 13a einen Rotor 18a und der Verbrennungsmotor eine Verbrennungsmotorausgangswelle 28a auf. Zur Bereitstellung von mehreren Getriebegängen weist die Drehmomentwandlervorrichtung ein nicht näher dargestelltes Getriebe auf, das in dem Kraftfluss hinter der Drehmomentwandlervorrichtung angeordnet ist. Das Getriebe weist zur Anbindung an die Drehmomentwandlervorrichtung eine Getriebeeingangswelle 16a auf. Die Verbrennungsmotorausgangswelle 28a ist als eine Kurbelwelle des Verbrennungsmotors ausgebildet. Das Kraftfahrzeug ist als ein Hybridkraftfahrzeug ausgebildet.

Die Drehmomentwandlervorrichtung weist weiter einen hydraulischen Drehmomentwandler 23a auf. Der Drehmomentwandler 23a ist als ein Anfahrelement ausgebildet. Er weist ein Pumpenrad 24a, ein Turbinenrad 29a und ein Leitrad 30a auf. Das Pumpenrad 24a ist permanent mit dem Rotor 18a des Elektromotors 13a verbunden und mit der Verbrennungsmotorausgangswelle 28a verbindbar. Das Turbinenrad 29a ist über einen Schwingungsdämpfer 31a permanent mit der Getriebeeingangswelle 16a verbunden.

Die Drehmomentwandlervorrichtung weist ferner eine Trennkupplung 12a auf, die dazu vorgesehen ist, in einem Betriebszustand den Elektromotor 13a und den Verbrennungsmotor mechanisch voneinander zu entkoppeln und in einem anderen Betriebszustand den Elektromotor 13a und den Verbrennungsmotor mechanisch miteinander zu koppeln. Die Trennkupplung 12a ist zur mechanischen Anbindung und zur mechanischen Trennung des Verbrennungsmotors an die bzw. von der Drehmomentwandlervorrichtung vorgesehen. Die Trennkupplung 12a ist zur mechanischen Kopplung dazu vorgesehen, die Verbrennungsmotorausgangswelle 28a mechanisch mit dem Rotor 18a zu verbinden und zur mechanischen Entkopplung die Verbrennungsmotorausgangswelle 28a mechanisch von dem Rotor 18a zu trennen. Die Trennkupplung 12a ist als eine Lamellenkupplung ausgebildet. Sie weist zur Verbindung der Verbrennungsmotorausgangswelle 28a mit dem Rotor 18a zwei Lamellenpakete auf. Jeweils ein Lamellenpaket umfasst mehrere Lamellen, die nebeneinander angeordnet sind. Die zwei Lamellenpakete greifen teilweise ineinander. Ein Lamellenpaket ist drehfest mit dem Rotor 18a und das andere Lamellenpaket drehfest mit der Verbrennungsmotorausgangswelle 28a verbunden. Das drehfest mit dem Rotor 18a verbundene Lamellenpaket ist als ein äußeres Lamellenpaket ausgebildet. Das drehfest mit der Verbrennungsmotorausgangswelle 28a verbundene Lamellenpaket ist als ein inneres Lamellenpaket ausgebildet. Grundsätzlich kann die Trennkupplung 12a auch nur eine Lamelle aufweisen.

Zur mechanisch direkten Verbindung des Elektromotors 13a und/oder des Verbrennungsmotors mit der Getriebeeingangswelle 16a weist die Drehmomentwandlervorrichtung eine Wandlerüberbrückungskupplung 15a auf. In einem anderen Betriebszustand ist die Wandlerüberbrückungskupplung 15a dazu vorgesehen, den Elektromotor 13a und/oder den Verbrennungsmotor mit der Getriebeeingangswelle 16a über den Drehmomentwandler 23a zu verbinden. Die Wandlerüberbrückungskupplung 15a ist zur Umgehung des Drehmomentwandlers 23a vorgesehen. Sie ist dazu vorgesehen, den Drehmomentwandler 23a in unwirtschaftlichen Betriebspunkten zu überbrücken. Die Wandlerüberbrückungskupplung 15a ist zur mechanischen Anbindung, d.h. über den Schwingungsdämpfer 31a, und zur hydraulischen Anbindung, d.h. über den Drehmomentwandler 23a, des Elektromotors 13a und/oder des Verbrennungsmotors an die Getriebeeingangswelle 16a vorgesehen. Sie ist dazu vorgesehen, zur mechanischen Anbindung den Rotor 18a mit der Getriebeeingangswelle 16a über den Schwingungsdämpfer 31a zu verbinden und zur hydraulischen Anbindung den Rotor 18a mit der Getriebeeingangswelle 16a über den Drehmomentwandler 23a zu verbinden. Die Wandlerüberbrückungskupplung 15a ist als eine Lamellenkupplung ausgebildet. Sie weist zur Anbindung des Rotors 18a an den Schwingungsdämpfer 31a zwei Lamellenpakete auf. Jeweils ein Lamellenpaket umfasst mehrere Lamellen, die nebeneinander angeordnet sind. Die zwei Lamellenpakete greifen teilweise ineinander. Ein Lamellenpaket ist drehfest mit dem Rotor 18a und das andere Lamellenpaket drehfest mit einem Eingang des Schwingungsdämpfers 31a verbunden. Das drehfest mit dem Rotor 18a verbundene Lamellenpaket ist als ein äußeres Lamellenpaket ausgebildet. Das drehfest mit dem Eingang des Schwingungsdämpfers 31a verbundene Lamellenpaket ist als ein inneres Lamellenpaket ausgebildet. Grundsätzlich kann die Wandlerüberbrückungskupplung 15a auch nur eine Lamelle aufweisen.

Zur Lagerung der Lamellenpakete der Trennkupplung 12a weist die Drehmomentwandlervorrichtung einen Lamellenträger 11 a und einen Lamellenträger 35a auf. Der Lamellenträger 11 a, der zur Aufnahme der Lamellen der Trennkupplung 12a vorgesehen ist, ist als ein Außenlamellenträger ausgebildet. Der Lamellenträger 35a ist als ein Innenlamellenträger ausgebildet. Der Lamellenträger 11a lagert axial beweglich die Lamellen des Lamellenpakets der Trennkupplung 12a, die drehfest mit dem Rotor 18a verbunden sind. Er lagert Außenlamellen der Trennkupplung 12a. Der Lamellenträger 35a lagert axial beweglich die Lamellen des Lamellenpakets der Trennkupplung 12a, die drehfest mit der Verbrennungsmotorausgangswelle 28a verbunden sind. Er lagert Innenlamellen der Trennkupplung 12a.

Zur Lagerung der Lamellenpakete der Wandlerüberbrückungskupplung 15a weist die Drehmomentwandlervorrichtung einen Lamellenträger 14a und einen Lamellenträger 36a auf. Der Lamellenträger 14a, der zur Aufnahme der Lamellen der Wandlerüberbrückungskupplung 15a vorgesehen ist, ist als ein Außenlamellenträger ausgebildet. Der Lamellenträger 36a ist als ein Innenlamellenträger ausgebildet. Der Lamellenträger 14a lagert axial beweglich die Lamellen des Lamellenpakets der Wandlerüberbrückungskupplung 15a, die drehfest mit dem Rotor 18a verbunden sind. Er lagert Außenlamellen der Wandlerüberbrückungskupplung 15a. Der Lamellenträger 36a lagert axial beweglich die Lamellen des Lamellenpakets der Wandlerüberbrückungskupplung 15a, die drehfest mit dem Eingang des Schwingungsdämpfers 31a verbunden sind. Er lagert Innenlamellen der Wandlerüberbrückungskupplung 15a.

Zur Ausbildung des Lamellenträgers 11a für die Trennkupplung 12a und des Lamellenträgers 14a für die Wandlerüberbrückungskupplung 15a weist die Drehmomentwandlervorrichtung ein einstückig ausgebildetes Gehäuseelement 10a auf. Das Gehäuseelement 10a ist dazu vorgesehen, den Drehmomentwandler 23a und den Verbrennungsmotor antriebstechnisch miteinander zu verbinden. Das Gehäuseelement 10a bildet den Lamellenträger 11a und den Lamellenträger 14a aus. Die Lamellenträger 11a, 14a sind durch das Gehäuseelement 10a einstückig miteinander ausgebildet. Die Lamellenträger 35a, 36a sind innerhalb des die Lamellenträger 11a, 14a ausbildenden Gehäuseelements 10a angeordnet.

Das einstückige Gehäuseelement 10a bildet den Lamellenträger 11a, der zur Aufnahme von dem äußeren Lamellenpaket der Trennkupplung 12a vorgesehen ist, und den Lamellenträger 14a, der zur Aufnahme von dem äußeren Lamellenpaket der Wandlerüberbrückungskupplung 15a vorgesehen ist. Das Gehäuseelement 10a nimmt die Lamellenpakete der Trennkupplung 12a und der Wandlerüberbrückungskupplung 15a axial beweglich, d.h. entlang einer Rotationsachse 32a der Drehmomentwandlervorrichtung beweglich auf, die drehfest mit dem Rotor 18a des Elektromotors 13a verbunden sind. Das einstückig ausgebildete Gehäuseelement 10a bildet einen Außenlamellenträger der Trennkupplung 12a und einen Außenlamellenträger der Wandlerüberbrückungskupplung 15a aus. Das äußere Lamellenpaket der Trennkupplung 12a und das äußere Lamellenpaket der Wandlerüberbrückungskupplung 15a sind auf dem gemeinsamen Gehäuseelement 10a drehfest angeordnet. Grundsätzlich kann der Lamellenträger 11 a und/oder der Lamellenträger 14a lediglich zur Aufnahme von einer Lamelle vorgesehen sein.

Zur Aufnahme des Rotors 18a weist die Drehmomentwandlervorrichtung einen Rotorträger 17a auf. Der Rotorträger 17a trägt den Rotor 18a des Elektromotors 13a. Zur drehmomentübertragenden Verbindung des Gehäuseelements 10a und des Rotorträgers 17a weist die Drehmomentwandlervorrichtung eine Steckverbindung auf. Das einstückige Gehäuseelement 10a und der Rotorträger 17a sind mittels der Steckverbindung permanent drehfest miteinander verbunden. Damit sind die Lamellenträger 11a, 14a mittels der Steckverbindung permanent drehfest mit dem Rotor 18a verbunden. Der Rotorträger 17a ist aus Stahl ausgebildet. Grundsätzlich kann das Gehäuseelement 10a aber auch zumindest teilweise den Rotorträger 17a ausbilden, wodurch der Rotorträger 17a und das Gehäuseelement 10a zumindest teilweise einstückig miteinander ausgebildet sind.

Zur Betätigung der Wandlerüberbrückungskupplung 15a weist die Drehmomentwandlervorrichtung eine Betätigungskolbenaufnahme 20a auf. Das einstückig ausgebildete Gehäuseelement 10a bildet die Betätigungskolbenaufnahme 20a zur Betätigung der Wandlerüberbrückungskupplung 15a aus. Die durch das Gehäuseelement 10a ausgebildete Betätigungskolbenaufnahme 20a bildet zur Betätigung der Wandlerüberbrückungskupplung 15a mit einem Betätigungskolben 22a der Drehmomentwandlervorrichtung eine hydraulische Druckkammer aus. Das Gehäuseelement 10a bildet somit eine Betätigungskolbenführung aus. Die Betätigungskolbenaufnahme 20a weist eine Trennwand auf. Die Trennwand der Betätigungskolbenaufnahme 20a ist einstückig mit dem Gehäuseelement 10a ausgebildet. Das Gehäuseelement 10a bildet somit zusätzlich zu den Lamellenträgern 11a, 14a auch die Trennwand der Betätigungskolbenaufnahme 20a aus. Die Lamellenträger 11a, 14a und die Trennwand der Betätigungskolbenaufnahme 20a sind durch das Gehäuseelement 10a einstückig miteinander ausgebildet. Die Trennwand der Betätigungskolbenaufnahme 20a ist als eine feste Wand der durch die Betätigungskolbenaufnahme 20a und den Betätigungskolben 22a ausgebildeten Druckkammer ausgebildet.

Der Betätigungskolben 22a bildet eine bewegliche Wand der durch die Betätigungskolbenaufnahme 20a und den Betätigungskolben 22a ausgebildeten Druckkammer aus. Durch eine Beaufschlagung der durch die Betätigungskolbenaufnahme 20a und den Betätigungskolben 22a gebildeten Druckkammer mit einem Betriebsmittel entsteht eine axiale Betätigungskraft, die den Betätigungskolben 22a in eine axiale Betätigungsrichtung 34a verschiebt, wodurch der Betätigungskolben 22a eine Lamelle des äußeren Lamellenpakets der Wandlerüberbrückungskupplung 15a in die Betätigungsrichtung 34a axial schiebt und die Lamellen der beiden Lamellenpakete der Wandlerüberbrückungskupplung 15a gegeneinander drückt. Dadurch ist die Wandlerüberbrückungskupplung 15a geschlossen und der Drehmomentwandler 23a wird umgangen. Das Betriebsmittel ist als Öl ausgebildet.

Zur Betätigung der Trennkupplung 12a weist die Drehmomentwandlervorrichtung eine Betätigungskolbenaufnahme 19a auf. Der Rotorträger 17a bildet die Betätigungskolbenaufnahme 19a zur Betätigung der Trennkupplung 12a aus. Die Betätigungskolbenaufnahme 19a bildet zur Betätigung der Trennkupplung 12a mit einem Betätigungskolben 21 a der Drehmomentwandlervorrichtung eine hydraulische Druckkammer aus. Die Betätigungskolbenaufnahme 19a weist eine Trennwand auf. Die Trennwand der Betätigungskolbenaufnahme 19a ist einstückig mit dem Rotorträger 17a ausgebildet. Der Rotorträger 17a bildet somit die Trennwand der Betätigungskolbenaufnahme 19a aus. Die Trennwand der Betätigungskolbenaufnahme 19a ist als eine feste Wand der durch die Betätigungskolbenaufnahme 19a und den Betätigungskolben 21a ausgebildeten Druckkammer ausgebildet. Der Betätigungskolben 21a bildet eine bewegliche Wand der durch die Betätigungskolbenaufnahme 19a und den Betätigungskolben 21a ausgebildeten Druckkammer aus. Durch eine Beaufschlagung der durch die Betätigungskolbenaufnahme 19a und den Betätigungskolben 21 a gebildeten Druckkammer mit einem Betriebsmittel entsteht eine axiale Betätigungskraft, die den Betätigungskolben 21a in eine axiale Betätigungsrichtung 33a verschiebt, wodurch der Betätigungskolben 21a eine Lamelle des äußeren Lamellenpakets der Trennkupplung 12a in die Betätigungsrichtung 33a axial schiebt und die Lamellen der beiden Lamellenpakete der Trennkupplung 12a gegeneinander drückt. Dadurch ist die Trennkupplung 12a geschlossen und die Verbrennungsmotorausgangswelle 28a mit dem Rotor 18a verbunden.

Die Betätigungskolbenaufnahme 19a ist dazu vorgesehen, die axiale Betätigungsrichtung 33a, in die der Betätigungskolben 21 a zur Schaltung der Trennkupplung 12a bewegt wird, bereitzustellen. Die Betätigungskolbenaufnahme 20a ist dazu vorgesehen, die axiale Betätigungsrichtung 34a, in die der Betätigungskolben 22a zur Schaltung der Wandlerüberbrückungskupplung 15a bewegt wird, bereitzustellen. In diesem Ausführungsbeispiel sind die Betätigungsrichtungen 33a, 34a gleich ausgerichtet. Sie zeigen in die gleiche Richtung und sind parallel zueinander orientiert. Die beiden Betätigungsrichtungen 33a, 34a zeigen jeweils in Richtung Drehmomentwandler 23a. Die Betätigungskolben 21a, 22a sind somit jeweils dem Drehmomentwandler 23a zugewandt, wobei der Betätigungskolben 21 a dem Betätigungskolben 22a zugewandt und der Betätigungskolben 22a dem Betätigungskolben 21 a abgewandt ist.

Entlang der Rotationsachse 32a ist die Betätigungskolbenaufnahme 19a vor der Trennkupplung 12a angeordnet. Die Betätigungskolbenaufnahme 20a ist entlang der Rotationsachse 32a hinter der Trennkupplung 12a und vor der Wandlerüberbrückungskupplung 15a angeordnet. Sie ist entlang der Rotationsachse 32a zwischen der Trennkupplung 12a und der Wandlerüberbrückungskupplung 15a angeordnet.

Das Gehäuseelement 10a bildet also die Lamellenträger 11 a, 14a und die Betätigungskolbenaufnahme 20a aus. Die Lamellenträger 11a, 14a und die Betätigungskolbenaufnahme 20a sind einstückig miteinander ausgebildet. Sie sind verbindungsstellenfrei, d.h. ohne eine Verbindungsstelle miteinander verbunden. Die Trennwand der Betätigungskolbenaufnahme 19a und die Trennwand der Betätigungskolbenaufnahme 20a sind separat voneinander ausgebildet. Sie sind beabstandet zueinander angeordnet. Die Trennwand der Betätigungskolbenaufnahme 20a ist dabei entlang der Rotationsachse 32a zwischen der Trennkupplung 12a und der Wandlerüberbrückungskupplung 15a angeordnet.

Zur permanenten Verbindung des Gehäuseelements 10a und damit des Rotors 18a mit dem Pumpenrad 24a weist die Drehmomentwandlervorrichtung eine einzige Formschlussverbindung 25a auf, die das Pumpenrad 24a und das Gehäuseelement 10a formschlüssig miteinander verbindet. Die Formschlussverbindung 25a verbindet das Pumpenrad 24a damit formschlüssig mit dem Lamellenträger 11a, mit dem Lamellenträger 14a, mit der Betätigungskolbenaufnahme 19a, mit der Betätigungskolbenaufnahme 20a und mit dem Rotorträger 17a. Die Drehmomentwandlervorrichtung weist zur Verbindung der beiden Lamellenträger 11 a, 14a, der beiden Betätigungskolbenaufnahmen 19a, 20a und des Rotorträgers 17a mit dem Pumpenrad 24a lediglich eine als die Formschlussverbindung 25a ausgebildete Verbindungsstelle und eine als die Steckverbindung ausgebildete Verbindungsstelle auf. Zur Verbindung der beiden Lamellenträger 11a, 14a und der Betätigungskolbenaufnahme 20a mit dem Pumpenrad 24a weist die Drehmomentwandlervorrichtung lediglich eine einzige als die Formschlussverbindung 25a ausgebildete Verbindungsstelle auf. Das Gehäuseelement 10a und das Pumpenrad 24a sind formschlüssig miteinander verbunden. Zur formschlüssigen Verbindung des Gehäuseelements 10a und des Pumpenrads 24a weist die Formschlussverbindung 25a ein Schraubelement 26a auf. Das Gehäuseelement 10a und das Pumpenrad 24a sind somit mittels des Schraubelements 26a formschlüssig miteinander verbunden. Sie sind verschraubt miteinander.

Zur einstückigen Ausbildung ist das Gehäuseelement 10a als ein Gussbauteil ausgebildet. Das Gehäuseelement 10a ist in einem Stück gegossen. Es wird zur Herstellung gegossen. Die beiden Lamellenträger 11a, 14a und die Betätigungskolbenaufnahme 20a bzw. die Trennwand der Betätigungskolbenaufnahme 20a sind durch das Gussbauteil ausgebildet. Sie sind durch einen Gießvorgang ausgebildet. Grundsätzlich kann das Gehäuseelement 10a auch als ein Sinterbauteil ausgebildet sein.

Zur Reduzierung eines Gewichts ist das Gehäuseelement 10a aus Leichtmetall ausgebildet. Die Lamellenträger 11a, 14a und die Betätigungskolbenaufnahme 20a bzw. die Trennwand der Betätigungskolbenaufnahme 20a sind aus Leichtmetall. In diesem Ausführungsbeispiel weisen das Gehäuseelement 10a und damit die Lamellenträger 11a, 14a und die Betätigungskolbenaufnahme 20a Aluminium auf. Das Gehäuseelement 10a ist aus Aluminium gegossen. Das Gehäuseelement 10a ist als ein Aluminiumgussteil ausgebildet. Somit sind die Lamellenträger 11a, 14a und die Betätigungskolbenaufnahme 20a aus Aluminium gegossen und damit als ein und dasselbe Aluminiumgussteil ausgebildet. Grundsätzlich kann das Gehäuseelement 10a alternativ oder zusätzlich Magnesium aufweisen. Es kann grundsätzlich als ein Magnesiumgussteil oder als ein Aluminium-Magnesium-Gussteil ausgebildet sein.

In den Figuren 2 bis 6 sind fünf weitere Ausführungsbeispiele gezeigt. Die nachfolgende Beschreibung beschränkt sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels, insbesondere der Figur 1, verwiesen werden kann. Zur Unterscheidung der Ausführungsbeispiele ist der Buchstabe a in den Bezugszeichen des Ausführungsbeispiels in der Figur 1 durch die Buchstaben b, c, d, e und f in den Bezugszeichen der Ausführungsbeispiele in den Figuren 2 bis 6 ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Figur 1 verwiesen werden.

In der Figur 2 ist eine alternativ ausgebildete erfindungsgemäße Drehmomentwandlervorrichtung eines Kraftfahrzeugs, mit zumindest einem einstückig ausgebildeten Gehäuseelement 10b, das einen Lamellenträger 11 b zur Aufnahme von mehreren Lamellen einer Trennkupplung 12b, einen Lamellenträger 14b zur Aufnahme von mehreren Lamellen einer Wandlerüberbrückungskupplung 15b und eine Betätigungskolbenaufnahme 20b zur Aufnahme eines Betätigungskolbens 22b ausbildet. Weiter weist die Drehmomentwandlervorrichtung einen Rotorträger 17b zur Aufnahme eines Rotors 18b eines Elektromotors 13b und einen Drehmomentwandler 23b auf, dessen Pumpenrad 24b mittels einer Formschlussverbindung 25b mit dem Gehäuseelement 10b und dessen Turbinenrad 29b mit einer Getriebeeingangswelle 16b verbunden ist.

Im Unterschied zu dem vorherigen Ausführungsbeispiel weist die Formschlussverbindung 25b zur formschlüssigen Verbindung des Pumpenrads 24b mit dem Gehäuseelement 10b ein Nietelement 27b auf. Das Gehäuseelement 10b und das Pumpenrad 24b sind somit mittels des Nietelements 27b formschlüssig miteinander verbunden, wobei über das Nietelement 27b zusätzlich zur formschlüssigen Verbindung auch eine kraftschlüssige Verbindung hergestellt wird. Sie sind miteinander vernietet. Das Nietelement 27b ist zusätzlich verschweißt. Das Gehäuseelement 10b und das Pumpenrad 24b sind damit mittels eines Schweißniets formschlüssig miteinander verbunden.

Weiter bildet das Gehäuseelement 10b im Unterschied zu dem vorhergehenden Ausführungsbeispiel die Betätigungskolbenaufnahme 20b zur Aufnahme des Betätigungskolbens 22b und eine Betätigungskolbenaufnahme 19b zur Aufnahme eines Betätigungskolbens 21 b aus. Die Betätigungskolbenaufnahme 19b und die Betätigungskolbenaufnahme 20b weisen eine gemeinsame Trennwand auf. Die gemeinsame Trennwand der Betätigungskolbenaufnahmen 19b, 20b ist dabei entlang einer Rotationsachse 32b zwischen der Trennkupplung 12b und der Wandlerüberbrückungskupplung 15b angeordnet. Sie ist als eine feste Wand einer durch die Betätigungskolbenaufnahme 19b und den Betätigungskolben 21b ausgebildeten Druckkammer und als eine feste Wand einer durch die Betätigungskolbenaufnahme 20b und den Betätigungskolben 22b ausgebildeten Druckkammer ausgebildet.

In diesem Ausführungsbeispiel stellen die Betätigungskolbenaufnahmen 19b, 20b jeweils eine Betätigungsrichtung 33b, 34b bereit, die entgegengesetzt zueinander ausgerichtet sind. Sie zeigen in entgegengesetzte Richtungen und sind parallel zueinander orientiert. Die beiden Betätigungsrichtungen 33b, 34b sind einander abgewandt. Die Betätigungsrichtung 33b der Betätigungskolbenaufnahme 19b zeigt weg von dem Drehmomentwandler 23b und ist diesem abgewandt. Die Betätigungsrichtung 34b der Betätigungskolbenaufnahme 20b zeigt in Richtung Drehmomentwandler 23b und ist diesem zugewandt. Der Betätigungskolben 21 b ist somit dem Drehmomentwandler 23b abgewandt und der Betätigungskolben 22b dem Drehmomentwandler 23b zugewandt. Die Betätigungskolben 21 b, 22b sind einander abgewandt. Entlang der Rotationsachse 32b sind die Betätigungskolbenaufnahmen 19b, 20b beide zwischen der Trennkupplung 12b und der Wandlerüberbrückungskupplung 15b angeordnet.

Zur einstückigen Ausbildung ist das Gehäuseelement 10b im Unterschied zu dem vorhergehenden Ausführungsbeispiel als ein Sinterbauteil ausgebildet. Das Gehäuseelement 10b ist in einem Stück gesintert. Es wird zur Herstellung gesintert. Die beiden Lamellenträger 11 b, 14b und die beiden Betätigungskolbenaufnahmen 19b, 20b, und damit die Trennwände, sind durch das Sinterbauteil ausgebildet. Sie sind durch einen Sintervorgang ausgebildet. Grundsätzlich kann das Gehäuseelement 10b auch als ein Gussbauteil ausgebildet sein.

Im Unterschied zu dem vorhergehenden Ausführungsbeispiel weisen das Gehäuseelement 10b und damit die Lamellenträger 11 b, 14b und die Betätigungskolbenaufnahmen 19b, 20b Magnesium auf. Das Gehäuseelement 10b ist aus Magnesium gesintert. Das Gehäuseelement 10b ist als ein Magnesiumsinterteil ausgebildet. Somit sind die Lamellenträger 11b, 14b und die Betätigungskolbenaufnahmen 19b, 20b aus Magnesium gesintert und damit als ein und dasselbe Magnesiumsinterteil ausgebildet. Grundsätzlich kann das Gehäuseelement 10b alternativ oder zusätzlich Aluminium aufweisen. Es kann grundsätzlich als ein Aluminium-Sinterteil oder als ein Aluminium-Magnesium-Sinterteil ausgebildet sein.

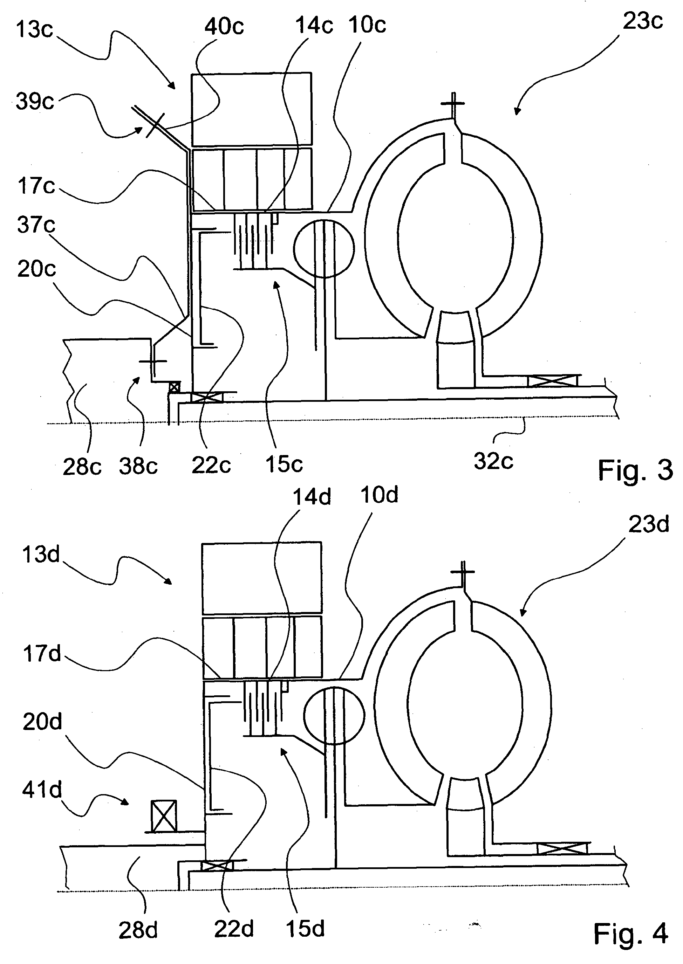

In der Figur 3 ist ein drittes Ausführungsbeispiel einer Drehmomentwandlervorrichtung eines Kraftfahrzeugs dargestellt. Im Unterschied zu den vorherigen Ausführungsbeispielen sind ein Verbrennungsmotor und ein Elektromotor 13c permanent mechanisch miteinander gekoppelt. Eine Verbrennungsmotorausgangswelle 28c des Verbrennungsmotors und ein Rotorträger 17c des Elektromotors 13c sind permanent mechanisch miteinander verbunden. Die Drehmomentwandlervorrichtung weist keine Trennkupplung auf.

Die Drehmomentwandlervorrichtung weist ein einstückig ausgebildetes Gehäuseelement 10c auf, das dazu vorgesehen ist, einen Drehmomentwandler 23c und den Verbrennungsmotor antriebstechnisch miteinander zu verbinden. Das Gehäuseelement 10c bildet einen als ein Außenlamellenträger ausgebildeten Lamellenträger 14c zur Aufnahme von mehreren Lamellen einer Wandlerüberbrückungskupplung 15c aus. Der Lamellenträger 14c nimmt ein Lamellenpaket auf. Das Gehäuseelement 10c bildet zudem eine Betätigungskolbenaufnahme 20c aus, die mit einem Betätigungskolben 22c eine Druckkammer zur Betätigung der Wandlerüberbrückungskupplung 15c ausbildet. Das Gehäuseelement 10c ist als ein aus Leichtmetall gebildetes Gussbauteil ausgebildet. Es weist Aluminium und/oder Magnesium auf. Grundsätzlich kann das Gehäuseelement 10c auch als ein Sinterbauteil ausgebildet sein.

Zur mechanischen Verbindung der Verbrennungsmotorausgangswelle 28c mit dem Rotorträger 17c weist die Drehmomentwandlervorrichtung eine Steckverbindung und eine Flexplattenanbindung auf. Die Steckverbindung verbindet das Gehäuseelement 10c und den Rotorträger 17c drehmomentübertragend miteinander. Sie verbindet das Gehäuseelement 10c und den Rotorträger 17c mechanisch miteinander. Die Flexplattenanbindung verbindet das Gehäuseelement 10c und die Verbrennungsmotorausgangswelle 28c drehmomentübertragend miteinander. Sie verbindet das Gehäuseelement 10c und die Verbrennungsmotorausgangswelle 28c mechanisch miteinander. Die Flexplattenanbindung weist eine Flexplatte 37c auf. Zur formschlüssigen Anbindung der Flexplatte 37c an die Verbrennungsmotorausgangswelle 28c weist die Flexplattenanbindung eine Formschlussverbindung 38c und zur formschlüssigen Anbindung der Flexplatte 37c an das Gehäuseelement 10c eine Formschlussverbindung 39c auf. Die Formschlussverbindungen 38c, 39c weisen jeweils mindestens ein Schraubelement auf, das das Gehäuseelement 10c formschlüssig mit der Verbrennungsmotorausgangswelle 28c verbinden. Grundsätzlich können die Formschlussverbindungen 38c, 39c zusätzlich oder alternativ zumindest ein Nietelement aufweisen.

Zur formschlüssigen Verbindung des Gehäuseelements 10c mit der Flexplatte 37c, und damit mit der Verbrennungsmotorausgangswelle 28c, bildet das Gehäuseelement 10c ein Flexplattenanbindungselement 40c aus. Das Flexplattenanbindungselement 40c und das Gehäuseelement 10c sind einstückig miteinander ausgebildet. Das Gehäuseelement 10c bildet das Flexplattenanbindungselement 40c aus. Die Formschlussverbindung 39c verbindet das Flexplattenanbindungselement 40c formschlüssig mit der Flexplatte 37c. Das Flexplattenanbindungselement 40c weist dabei einen zweiteiligen Verlauf auf. Ein erster Teil des Flexplattenanbindungselements 40c verläuft bezüglich einer Rotationsachse 32c radial nach außen, d.h. in eine Richtung, die der Rotationsachse 32c abgewandt ist, bevor ein anschließender zweiter Teil des Flexplattenanbindungselements 40c abknickt und bezüglich der Rotationsachse 32c teilweise axial in Richtung Verbrennungsmotor und teilweise radial nach außen verläuft. Natürlich kann das Flexplattenanbindungselement 40c und das Gehäuseelement 10c auch separat zueinander ausgebildet sein, wobei sie beispielsweise mittels zumindest eines Schraubelements permanent mechanisch miteinander verbunden sind.

In der Figur 4 ist ein viertes Ausführungsbeispiel einer Drehmomentwandlervorrichtung eines Kraftfahrzeugs dargestellt. Die Drehmomentwandlervorrichtung weist ein einstückig ausgebildetes Gehäuseelement 10d auf, das dazu vorgesehen ist, einen Drehmomentwandler 23d und den Verbrennungsmotor antriebstechnisch miteinander zu verbinden. Das Gehäuseelement 10d bildet einen als ein Außenlamellenträger ausgebildeten Lamellenträger 14d zur Aufnahme von mehreren Lamellen einer Wandlerüberbrückungskupplung 15d aus. Der Lamellenträger 14d nimmt ein Lamellenpaket auf. Das Gehäuseelement 10d bildet zudem eine Betätigungskolbenaufnahme 20d aus, die mit einem Betätigungskolben 22d eine Druckkammer zur Betätigung der Wandlerüberbrückungskupplung 15d ausbildet. Zur Bereitstellung eines elektrischen Antriebsmoments weist die Drehmomentwandlervorrichtung einen Elektromotor 13d mit einem Rotorträger 17d auf. Das Gehäuseelement 10d ist als ein aus Leichtmetall gebildetes Gussbauteil ausgebildet. Es weist Aluminium und/oder Magnesium aus. Grundsätzlich kann das Gehäuseelement 10c auch als ein Sinterbauteil ausgebildet sein. Im Unterschied zu dem vorherigen Ausführungsbeispiel gemäß Figur 3 weist die Drehmomentwandlervorrichtung zur permanenten mechanischen Anbindung des Gehäuseelements 10d an den Verbrennungsmotor und damit an eine Verbrennungsmotorausgangswelle 28d eine Radiallagerung 41 d auf.

Grundsätzlich kann das Gehäuseelement 10d zusätzlich oder alternativ über ein Massenschwungrad mit einem Verbrennungsmotor und damit mit der Verbrennungsmotorausgangswelle 28d permanent mechanisch verbunden sein. Das Massenschwungrad ist bezüglich eines Kraftflusses zwischen dem Verbrennungsmotor und dem Gehäuseelement 10d angeordnet. Das Massenschwungrad verbindet die Verbrennungsmotorausgangswelle 28d des Verbrennungsmotors mit dem Gehäuseelement 10d. Das Massenschwungrad ist als ein Zweimassenschwungrad ausgebildet. Das Massenschwungrad weist eine primäre Schwungmasse, die fest mit der Verbrennungsmotorausgangswelle 28d verbunden ist, und eine sekundäre Schwungmasse, die fest mit dem Gehäuseelement 10d verbunden ist, auf. Die beiden Schwungmassen sind mittels eines Torsionsdämpfers miteinander verbunden. Grundsätzlich kann das Gehäuseelement 10d die sekundäre Schwungmasse des Massenschwungrads ausbilden, wodurch das Gehäuseelement 10d und das Massenschwungrad teilweise einstückig miteinander ausgebildet sind.

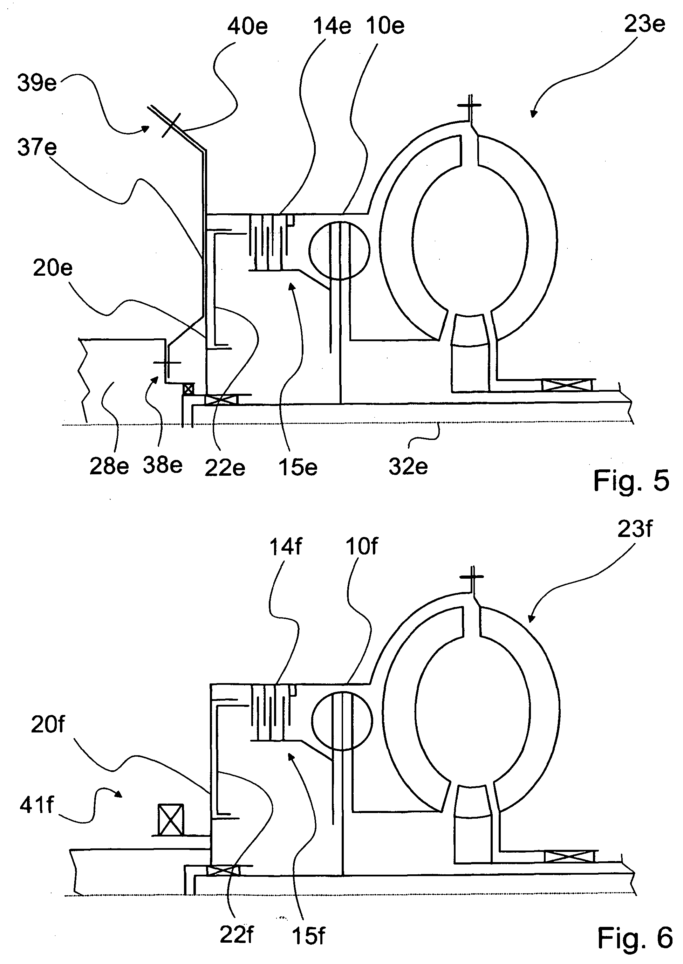

In der Figur 5 ist ein fünftes Ausführungsbeispiel einer Drehmomentwandlervorrichtung eines Kraftfahrzeugs dargestellt. Im Unterschied zu den vorherigen Ausführungsbeispielen ist das Kraftfahrzeug als ein rein verbrennungsmotorisch betriebenes Kraftfahrzeug ausgebildet. Das Kraftfahrzeug weist zur Bereitstellung eines Antriebsmoments lediglich einen Verbrennungsmotor auf. Es weist keinen Elektromotor auf, der zum Antrieb von Antriebsrädern des Kraftfahrzeugs vorgesehen ist.

Die Drehmomentwandlervorrichtung weist ein einstückig ausgebildetes Gehäuseelement 10e auf, das dazu vorgesehen ist, einen Drehmomentwandler 23e und den Verbrennungsmotor antriebstechnisch miteinander zu verbinden. Das Gehäuseelement 10e bildet einen als ein Außenlamellenträger ausgebildeten Lamellenträger 14e zur Aufnahme von mehreren Lamellen einer Wandlerüberbrückungskupplung 15e aus. Der Lamellenträger 14e nimmt ein Lamellenpaket auf. Das Gehäuseelement 10e bildet zudem eine Betätigungskolbenaufnahme 20e aus, die mit einem Betätigungskolben 22e eine Druckkammer zur Betätigung der Wandlerüberbrückungskupplung 15e ausbildet. Das Gehäuseelement 10e ist als ein aus Leichtmetall gebildetes Gussbauteil ausgebildet. Es weist Aluminium und/oder Magnesium aus. Grundsätzlich kann das Gehäuseelement 10e auch als ein Sinterbauteil ausgebildet sein.

Zur mechanischen Verbindung einer Verbrennungsmotorausgangswelle 28e des Verbrennungsmotors mit dem Gehäuseelement 10e weist die Drehmomentwandlervorrichtung eine Flexplattenanbindung auf. Die Flexplattenanbindung verbindet das Gehäuseelement 10e und die Verbrennungsmotorausgangswelle 28e drehmomentübertragend miteinander. Die Flexplattenanbindung weist eine Flexplatte 37e auf. Zur formschlüssigen Anbindung der Flexplatte 37e an die Verbrennungsmotorausgangswelle 28e weist die Flexplattenanbindung eine Formschlussverbindung 38e und zur formschlüssigen Anbindung der Flexplatte 37e an das Gehäuseelement 10e eine Formschlussverbindung 39e auf. Die Formschlussverbindungen 38e, 39e weisen jeweils mindestens ein Schraubelement auf, das das Gehäuseelement 10e formschlüssig mit der Verbrennungsmotorausgangswelle 28e verbinden. Grundsätzlich können die Formschlussverbindungen 38e, 39e zusätzlich oder alternativ zumindest ein Nietelement aufweisen.

Zur formschlüssigen Verbindung des Gehäuseelements 10e mit der Flexplatte 37e, und damit mit der Verbrennungsmotorausgangswelle 28e, bildet das Gehäuseelement 10e ein Flexplattenanbindungselement 40e aus. Das Flexplattenanbindungselement 40e und das Gehäuseelement 10e sind einstückig miteinander ausgebildet Die Formschlussverbindung 39e verbindet das Flexplattenanbindungselement 40e formschlüssig mit der Flexplatte 37e. Das Flexplattenanbindungselement 40e weist dabei einen zweiteiligen Verlauf auf. Ein erster Teil des Flexplattenanbindungselements 40e verläuft bezüglich einer Rotationsachse 32e radial nach außen, d.h. in eine Richtung, die der Rotationsachse 32e abgewandt ist, bevor ein anschließender zweiter Teil des Flexplattenanbindungselements 40e abknickt und bezüglich der Rotationsachse 32e teilweise axial in Richtung Verbrennungsmotor und teilweise radial nach außen verläuft.

In der Figur 6 ist ein sechstes Ausführungsbeispiel einer Drehmomentwandlervorrichtung eines Kraftfahrzeugs dargestellt. Die Drehmomentwandlervorrichtung weist ein einstückig ausgebildetes Gehäuseelement 10f auf, das dazu vorgesehen ist, einen Drehmomentwandler 23f und einen Verbrennungsmotor antriebstechnisch miteinander zu verbinden. Das Gehäuseelement 10f bildet einen als ein Außenlamellenträger ausgebildeten Lamellenträger 14f zur Aufnahme von mehreren Lamellen einer Wandlerüberbrückungskupplung 15f aus. Der Lamellenträger 14f nimmt ein Lamellenpaket auf. Das Gehäuseelement 10f bildet zudem eine Betätigungskolbenaufnahme 20f aus, die mit einem Betätigungskolben 22f eine Druckkammer zur Betätigung der Wandlerüberbrückungskupplung 15f ausbildet. Das Gehäuseelement 10f ist als ein aus Leichtmetall gebildetes Gussbauteil ausgebildet. Es weist Aluminium und/oder Magnesium auf. Grundsätzlich kann das Gehäuseelement 10e auch als ein Sinterbauteil ausgebildet sein. Im Unterschied zu dem vorherigen Ausführungsbeispiel gemäß Figur 5 weist die Drehmomentwandlervorrichtung zur permanenten mechanischen Anbindung des Gehäuseelements 10f an den Verbrennungsmotor eine Radiallagerung 41d auf.

## Patentansprüche

1. Drehmomentwandlervorrichtung für ein Kraftfahrzeug, mit zumindest einem einstückig ausgebildeten Gehäuseelement (10a; 10b), das dazu vorgesehen ist, einen Drehmomentwandler (23a; 23b) und einen Verbrennungsmotor antriebstechnisch miteinander zu verbinden,
wobei das Gehäuseelement (10a; 10b) wenigstens einen Lamellenträger (14a; 14b) zur Aufnahme von zumindest einer Lamelle einer Wandlerüberbrückungskupplung (15a; 15b) ausbildet, wobei das Gehäuseelement (10a; 10b) wenigstens einen Lamellenträger (11a; 11b) zur Aufnahme von zumindest einer Lamelle einer Trennkupplung (12a; 12b), die dazu vorgesehen ist, in zumindest einem Betriebszustand einen Elektromotor (13a; 13b) und den Verbrennungsmotor mechanisch voneinander zu entkoppeln, ausbildet, **dadurch gekennzeichnet, dass**
das Gehäuseelement (10a; 10b) zumindest eine Betätigungskolbenaufnahme (20a; 20b) ausbildet, die dazu vorgesehen ist, zumindest mit einem Betätigungskolben (22a; 22b) eine Druckkammer zur Betätigung der Wandlerüberbrückungskupplung (15a; 15b ) auszubilden,
und dass
die Betätigungskolbenaufnahme (20a; 20b) für die Betätigung der Wandlerüberbrückungskupplung (15a; 15b) eine Trennwand aufweist, welche einstückig mit dem Gehäuseelement (10a; 10b) ausgebildet ist, wobei die Trennwand entlang einer Rotationsachse (32a; 32b) zwischen der Trennkupplung (12a, 12b) und der Wandlerüberbrückungskupplung (15a, 15b) angeordnet ist.

2. Drehmomentwandlervorrichtung nach Anspruch 1,
**dadurch gekennzeichnet, dass**
das Gehäuseelement (10b) zumindest eine Betätigungskolbenaufnahme (19b) ausbildet, die dazu vorgesehen ist, zumindest mit einem Betätigungskolben (21b) eine Druckkammer zur Betätigung der Trennkupplung ( 12b) auszubilden.

3. Drehmomentwandlervorrichtung nach einem der vorhergehenden Ansprüche, **gekennzeichnet durch**
einen Rotorträger (17a; 17b) und eine Steckverbindung, die das Gehäuseelement (10a; 10) und den Rotorträger (17a; 17b) drehmomentübertragend miteinander verbindet.

4. Drehmomentwandlervorrichtung nach einem der vorhergehenden Ansprüche, **dadurch gekennzeichnet, dass**
das Gehäuseelement (10a; 10b) als ein Guss- und/oder Sinterbauteil ausgebildet ist.

5. Drehmomentwandlervorrichtung nach einem der vorhergehenden Ansprüche, **dadurch gekennzeichnet, dass**
das Gehäuseelement (10a; 10b) zumindest im Wesentlichen aus Leichtmetall ausgebildet ist.

6. Drehmomentwandlervorrichtung nach einem der vorhergehenden Ansprüche, **dadurch gekennzeichnet, dass**
das Gehäuseelement (10a; 10b) Aluminium und/oder Magnesium aufweist.

7. Drehmomentwandlervorrichtung nach einem der vorhergehenden Ansprüche, **gekennzeichnet durch**
einen Innenlamellenträger (36a), welcher Innenlamellen der wandlerüberbrückungskupplung (15a;15b) axial beweglich lagert, die drehfest mit einem Eingang eines Schwingungsdämpfers (31a) verbunden sind,
sowie **durch** einen Außenlamellenträger (14a; 14b) welcher Außenlamellen der Wandlerüberbückungskupplung (15a; 15b) axial beweglich lagert, die drehfest der Wandlerüberbrückungskupplung (15a; 15b) axial beweglich lagert, die drehfest mit einem Rotor (18a; 18b) des Elektromotors (13a; 13b) verbunden sind.

## Claims

1. Torque converter device for a motor vehicle, having at least one integrally formed housing element (10a; 10b) which is provided to drivingly interconnect a torque converter (23a; 23b) and an internal combustion engine,
wherein the housing element (10a; 10b) forms at least one disc carrier (14a; 14b) to receive at least one disc of a converter bridging clutch (15a; 15b),
wherein the housing element (10a; 10b) forms at least one disc carrier (11 a; 11 b) to receive at least one disc of a separating clutch (12a; 12b) which is provided to mechanically disengage an electric motor (13a; 13b) and the internal combustion engine from each other in at least one operating state,
**characterised in that**
the housing element (10a; 10b) forms at least one actuating piston receptacle (20a; 20b) which is provided to form, at least with an actuating piston (22a; 22b), a pressure chamber to actuate the converter bridging clutch (15a; 15b),
and the actuating piston receptacle (20a; 20b) has a separating wall for actuation of the converter bridging clutch (15a; 15b), which separating wall is formed integrally with the housing element (10a; 10b), wherein the separating wall is arranged along a rotation axis (32a; 32b) between the separating clutch (12a; 12b) and the converter bridging clutch (15a; 15b).

2. Torque converter device according to claim 1,
**characterised in that**
the housing element (10b) forms at least one actuating piston receptacle (19b) which is provided to form, at least with an actuating piston (21 b), a pressure chamber to actuate the separating clutch (12b).

3. Torque converter device according to one of the preceding claims, **characterised by**
a rotor carrier (17a; 17b) and a plug connection which interconnects the housing element (10a; 10b) and the rotor carrier (17a; 17b) in a torque transmitting way.

4. Torque converter device according to one of the preceding claims, **characterised in that**
the housing element (10a; 10b) is formed as a cast and / or sintered component.

5. Torque converter device according to one of the preceding claims, **characterised in that**
the housing element (10a; 10b) is formed at least substantially from light metal.

6. Torque converter device according to one of the preceding claims, **characterised in that**
the housing element (10a; 10b) has aluminium and / or magnesium.

7. Torque converter device according to one of the preceding claims, **characterised by**
an inner disc carrier (36a) which bears inner discs of the converter bridging clutch (15a; 15b) to be axially movable, which are rotationally securely connected to an inlet of a vibration damper (31 a),
and also by an outer disc carrier (14a; 14b) which bears outer discs of the converter bridging clutch (15a; 15b) to be axially movable, which are rotationally securely connected to a rotor (18a; 18b) of the electric motor (13a; 13b).

## Revendications

1. Dispositif de convertisseur de couple pour un véhicule automobile, comprenant au moins un élément de carter (10a, 10b) formé d'un seul tenant qui permet de relier par technique d'entraînement un convertisseur de couple (23a, 23b) et un moteur à combustion l'un à l'autre, l'élément (10a, 10b) de carter forme au moins un porte-lames (14a, 14b) destiné à recevoir au moins une lame d'un embrayage de blocage du convertisseur (15a, 15b), l'élément (10a, 10b) de carter formant au moins un porte-lames (11a, 14b) destiné à recevoir au moins une lame d'un embrayage de coupure (12a, 12b) qui permet dans au moins un état de fonctionnement de désaccoupler un moteur électrique (13a, 13b) et le moteur de combustion, **caractérisé en ce que** l'élément (10a, 10b) de carter forme au moins un élément (20a, 20b) de réception de piston d'actionnement qui permet de former au moins à l'aide d'un piston d'actionnement (22a, 22b) une chambre de pression destinée à actionner l'embrayage de blocage du convertisseur (15a, 15b), et **en ce que** l'élément (20a, 20b) de piston d'actionnement présente une paroi de séparation pour l'actionnement de l'embrayage (15a, 15b) de blocage de convertisseur, ladite paroi de séparation étant formée d'un seul tenant avec l'élément (10a, 10b) de carter, la paroi de séparation étant disposée le long d'un axe de rotation (32a, 32b) entre l'embrayage de séparation (12a, 12b) et l'embrayage de blocage du convertisseur (15a, 15b).

2. Dispositif de convertisseur de couple selon la revendication 1, **caractérisé en ce que** l'élément (10a, 10b) de carter forme au moins un élément (20a, 20b) de réception de piston d'actionnement (19b) qui permet de former au moins à l'aide d'un piston d'actionnement (22a, 22b) une chambre de pression destinée à actionner l'embrayage de coupure (12b).

3. Dispositif de convertisseur de couple selon l'une quelconque des revendications précédentes, **caractérisé par** un support de rotor (17a, 17b) et une fiche de raccordement qui relie ensemble par transmission de couple l'élément de carter (10a, 10b) et le support de rotor (17a, 17b).

4. Dispositif de convertisseur de couple selon l'une quelconque des revendications précédentes, **caractérisé en ce que** l'élément (10a, 10b) de carter est formé comme un composant fritté et/ou coulé.

5. Dispositif de convertisseur de couple selon l'une quelconque des revendications précédentes, **caractérisé en ce que** l'élément (10a, 10b) de carter est constitué au moins essentiellement de métal léger.

6. Dispositif de convertisseur de couple selon l'une quelconque des revendications précédentes, **caractérisé en ce que** l'élément (10a, 10b) de carter comprend de l'aluminium et/ou du magnésium.

7. Dispositif de convertisseur de couple selon l'une quelconque des revendications précédentes, **caractérisé par** un porte-lames internes (36a) qui loge de façon axialement mobile les lames internes de l'embrayage de blocage du convertisseur (15a, 15b) qui sont reliées solidaire en rotation avec une entrée d'un amortisseur de vibrations (31 a), et par un porte-lames extérieures (14a, 14b), qui loge de façon axialement mobile les lames extérieures de l'embrayage de blocage du convertisseur (15a, 15b) qui sont reliées solidaire en rotation avec un rotor (18a, 18b) du moteur électrique (13a, 13b).
